# EUROPÄISCHE PATENTSCHRIFT

(11) **EP 0 727 345 B1**
(45) Veröffentlichungstag und Bekanntmachung des Hinweises auf die Patenterteilung: **10.01.2001**
(21) Anmeldenummer: 96101868.6
(22) Anmeldetag: 09.02.1996
(51) Int. Cl.: B62D 65/00, B23P 21/00

(54) **Anlage zum Zusammenbau von Kraftfahrzeugkarosserien**
Installation for the assembly of car bodies
Installation pour l'assemblage de carosseries d'automobiles

(30) Priorität: 18.02.1995 DE 19505622
(43) Veröffentlichungstag der Anmeldung: 21.08.1996
(73) Patentinhaber: ADAM OPEL AG, 65423 Rüsselsheim (DE)
(72) Erfinder: Amat-Kreft, Ernst-Peter, Dipl.-Ing. (TH), D-55459 Aspisheim (DE); Debus, Thomas, Dipl.-Ing. (FH), D-65193 Wiesbaden (DE); Fambach, Ullrich, Dipl.-Ing. (FH), D-61440 Oberursel-Rommersheim (DE); Klein, Peter, Dipl.-Ing. (TH), D-65239 Hochheim (DE); Riek, Bruno, A., Dipl.-Ing. (TH), D-64521 Gross-Gerau (DE)
(74) Vertreter: Kümpfel, Heinz, Dipl.-Ing.

(56) Entgegenhaltungen:
- EP-A- 0 438 989
- DE-A- 3 228 378
- DE-A- 4 315 460
- DE-C- 4 138 139
- US-A- 5 226 584
- MIKTON, J.R.: "Volkswagen beat labour shortage with automated welding line" METALWORKING PRODUCTION, Bd. 108, Nr. 5, 29.Januar 1964, Seiten 74-78, XP002054003
- PATENT ABSTRACTS OF JAPAN vol. 012, no. 384 (M-753), 13.Oktober 1988 & JP 63 137080 A (NISSAN MOTOR CO LTD), 9.Juni 1988,
- PATENT ABSTRACTS OF JAPAN vol. 015, no. 053 (M-1079), 7.Februar 1991 & JP 02 284836 A (MITSUBISHI MOTORS CORP), 22.November 1990,
- PATENT ABSTRACTS OF JAPAN vol. 011, no. 175 (M-596), 5.Juni 1987 & JP 62 006880 A (SANYO KIKO KK), 13.Januar 1987,

## Beschreibung

Die Erfindung betrifft eine Anlage zum Zusammenbau von Kraftfahrzeugkarosserien aus Blechteilen unter Einbeziehung einer Rundtaktmaschine gemäß dem Oberbegriff des Patentanspruches 1

Mit DE 41 38 139 ist eine Rundtaktmaschine für Montage- und Fügeoperationen, insbesondere für das widerstandselektrische Zusammenschweißen von Blechteilen in der Karosseriefertigung beschrieben, deren Arbeitsstationen auf einer Kreisbahn gleichmäßig verteilt angeordnet sind und bei der die auf den Arbeitsstationen befindlichen Werkstücke mittels eines als drehbarer Ring ausgebildeten Shuttles gemeinsam taktweise von einer Station zur anderen zwischen den an den Stationen fest angeordneten Oberwerkzeugen und Unterwerkzeugen weitergereicht werden.

Eine solche Rundtaktmaschine ermöglicht gegenüber einer Linien-Taktmaschine zwar eine flächenmäßige Konzentration der Arbeitsstationen, jedoch ist die Zugänglichkeit der Arbeitsstationen vom Zentrum der Rundtaktmaschine her beschränkt. Sollen die Werkstücke auch an der zum Zentrum weisenden Seite bearbeitet werden, dann ist ein Umspannen erforderlich. Das Umspannen der teilgeschweißten Bauteile, die sich dabei verziehen können, ist zeitaufwendig und kostenintensiv. Damit ist eine solche Rundtaktmaschine mit Vorteil nur bei solchen Montageoperationen einsetzbar, bei denen die zu fügenden Teile alle von einer Seite her und möglichst gleichzeitig aufgelegt werden können. Das ist für die Fertigung von Karosseriesektionen möglich, nicht aber für die Montage ganzer Karosserien.

Eine weitere Rundtaktmaschine zum Schweißen von aus Einzelteilen aufgebauten und quer zu verschweißenden Bauteilen ist mit DE 43 15 460 beschrieben. Am Umfang des taktweise weiterdrehbaren Drehtisches dieser Rundtaktmaschine sind in gleichmäßigen Abständen mehrere Werkstückhalter zur lagedefinierten Halterung der einzulegenden Einzelbleche sowie diesen Werkstückhaltern zugeordnete Arbeitsstationen angeordnet, wobei die Werkstückhalter in die Arbeitsstationen einfahrbar sind. Eine Arbeitsstation ist als Bestückungs- und/oder Entnahmestation zur lagedefinierten Bestückung der Werkstückhalter mit den Einzelblechen bzw. zur Entnahme der auf dem Drehtisch geschweißten Bauteile ausgebildet. An einer Arbeitsstation ist zumindest eine beweglich geführte programmierbare Schweißzange vorgesehen.

Mit einer solchen Maschine kann zwar die beweglich geführte programmierbare Schweißzange an einer Arbeitsstation Arbeitsoperationen auch von manuell unzugänglichen Seiten her durchführen. Ein Anfügen von weiteren Bauteilen, insbesondere vom Zentrum her, ist jedoch nicht oder nur mit großen Schwierigkeiten möglich, so daß auch eine solche Maschine für die Fertigung ganzer Karosserien nicht geeignet ist.

Mit Metallworking Production, Vol. 108, No. 5, 29. Januar 1964, Seiten 74 - 78, Mikton, J. R. "Volkswagen beat labour shortage with automated body welding line" ist eine gattungsgemäße Anlage zum Zusammenbau von Kraftfahrzeugkarosserien dargestellt, bei der eine Runktaktmaschine zum Weiterleiten der aufliegenden Werkstücke von einer Bearbeitungsstation zur anderen innerhalb eines begrenzten Arbeitsbereiches einer sonst als linienförmig ausgebildeten Anlage einbezogen ist. Im linienförmigen Bereich dieser Anlage sind in an sich bekannter Weise auch Werkzeuge an die Linie überspannenden Portalen angeordnet. Eine verbesserte Zugänglichkeit zu den Arbeitspositionen wird durch diese Rundtaktmaschine nicht erzielt.

JP-A-63 137 080 zeigt eine Anlage zum Zusammenbau von Kraftfahrzeugen verschiedener Typen, bei der in eine linienförmige Haupt-Montagestraße ein Drehtisch einbezogen ist, an dessen Umfang Werkzeuge angeordnet sind, die alternativ entprechend dem jeweils auf der Anlage befindlichen Fahrzeugtyp zum Einsatz kommen. Der Drehtisch bringt das Fahrzeug in die für das entsprechende Werkzeug richtige Bearbeitungsposition.

Aufgabe der Erfindung ist es, eine Anlage zum Zusammenbau ganzer Kraftfahrzeugkarosserien aus Blechteilen zu schaffen, bei der zur besseren Flächennutzung eine Rundtaktmaschine zum Weitertransport der zu bearbeitenden Karosserie genutzt wird, bei der aber trotzdem eine allseitig gute Zugänglichkeit zu den Arbeitsoperationen gegeben ist.

Erfindungsgemäß wird diese Aufgabe durch die kennzeichnenden Merkmale des Anspruches 1 gelöst.

Eine solche Anlage ermöglicht neben der bei Rundtaktanlagen vorteilhaften flächensparenden Anordnung der Arbeitstakte eine auch gegenüber Bandanlagen bessere Zugänglichkeit der Werkstücke an den einzelnen Arbeitsstationen, da das Werkstück, nämlich die Kraftfahrzeugkarosserie bzw. während ihres Zusammenbaus deren Teile, insbesondere bei Auflage auf den dritten Werkstückträgern außerhalb des Drehtisches sowohl von beiden Seiten, aber auch von der Front- und der Heckseite her, durch die am Drehtisch positionierten Handhabeautomaten bzw. Schweißroboter bearbeitbar ist. Von oben her können die am Portal befestigten Handhabungsautomaten vorteilhaft zur Teilezuführung genutzt werden. Gleichfalls am Portal befindliche Schweißelektroden können von oben her auf das Werkstück einwirken.

Dabei kann es von Vorteil sein, von oben einwirkende Schweißelektroden, die gemeinsam mit in den Hubtischen angeordneten vertikal justierbaren Gegenelektroden zusammenarbeiten, am Portal zu befestigen. Damit können separat zu lagernde Schweißwerkzeuge reduziert werden.

Ein weiterer Vorteil ergibt sich durch die Anordnung der erforderlichen Transformatoren, Schalt- und Steuerschränke auf dem Portal. Durch eine solche Maßnahme kann ein weiterer Raumgewinn erzielt werden.

In vorteilhafter Weise sind die zweiten und dritten Werkstückträger mit einer ersten Gruppe von Werkstückaufnahmefixpunkten und die ersten Werkstückträger mit einer zweiten Gruppe von Werkstückaufnahmefixpunkten versehen. Damit kann jedes Werkstück während der gesamten Transport- und Bearbeitungszeit gegenüber der Anlage und den mit ihr fest verbundenen Werkzeugen wechselweise exakt fixiert werden, unabhängig davon, auf welchem Werkstückträger es gerade ruht. Ein Verziehen gehefteter Werkstücke ist damit nicht mehr möglich, so daß dadurch auch eine gleichmäßige Qualität der Werkstücke erzielt wird.

Ein Ausführungsbeispiel der Erfindung ist anhand von Zeichnungen nachstehend näher beschrieben. Es zeigen
- Fig. 1:: eine Draufsicht auf eine erfindungsgemäße Anlage;
- Fig. 2:: einen Schnitt entlang der Linie A-A in Figur 1;
- Fig. 3:: einen Schnitt entlang der Linie B-B in Figur 1;
- Fig. 4:: eine Anlage gemäß der Erfindung, eingeordnet in eine Produktionsanlage für Kraftfahrzeugkarosserien.

Um eine senkrechtstehende Achse 1 ist ein Drehtisch 2 drehbar gelagert, auf dem sechs in gleichem Winkelabstand verteilte erste Werkstückträger 3, 4, 5, 6, 7, 8 strahlenförmig angeordnet sind. Der Drehtisch 2 wird von einem nicht dargestellten Antrieb im Zeitabstand eines Arbeitstaktes um jeweils 60° weitergedreht. Unterhalb der ersten Werkstückträger 3 bis 8 befinden sich Hubtische 9, die fest auf dem Untergrund 10 einer Fabrikationshalle aufgesetzt sind und an ihrer oberen Seite jeweils einen zweiten Werkstückträger 11 aufweisen.

Radial zu zwei auf dem Drehtisch 2 befindlichen ersten Werkstückträgern 4 und 6 ist außerhalb des Drehtisches 2 jeweils ein weiterer Hubtisch 12 angeordnet. Jeder dieser weiteren Hubtische 12 ist an seiner Oberseite mit dritten Werkstückträgern 13 versehen. Die Hubtische 9 und 13 sind in ihrer Höhe variabel. Die innerhalb des Drehtisches 2 angeordneten Hubtische 9 sind in ihrer niedrigen Höhe mit den zweiten Werkstückträgern 11 unterhalb der Rotationsebene des Drehtisches 2 und den auf ihr befindlichen ersten Werkstückträgern 3 bis 8; in ihrer maximalen Höhe überragen sie jedoch die Rotationsebene des Drehtisches 2. Die zweiten Werkstückträger 11 liegen dann auf einer höheren Ebene als die ersten Werkstückträger 3 bis 8.

Zwischen den dritten Werkstückträgern 13 auf den Hubtischen 12 außerhalb des Drehtisches 2 und den jeweils benachbart auf dem Drehtisch 2 angeordneten ersten Werkstückträgern 3 bis 8 ist ein Shuttle 14 zum Versetzen von auf der Anlage befindlichen Werkstücken 15 von dem ersten Werkstückträger auf den dritten Werkstückträger 13 und umgekehrt vorgesehen. Zu diesem Zweck kann der Shuttle 14 zuerst eine Hubbewegung, anschließend eine translatorische Bewegung in radialer Richtung in bezug auf den Drehtisch 2 und anschließend eine Absenkbewegung machen und dabei das Werkstück 15 von dem einen Werkstückträger zum radial benachbarten anderen befördern. Der Shuttle 14 kann jedoch auch nur translatorische Bewegungen in radialer Richtung ausführen, während die Hubtische 9 und 12 Hubbewegungen ausführen und das Werkstück 15 jeweils auf den Shuttle 14 aufsetzen bzw. von diesem abheben, wobei das Werkstück 15 auf den Werkstückträgern 11 bzw. 13 aufgenommen wird.

Ein von Stützen 16 getragenes Portal 17 überspannt teilweise den Drehtisch 2. Am Portal 17 ist ein Ausleger 18 angebracht, an welchem ein Hängeförderer 19 zum Auflegen eines Werkstückes 15 auf den Werkstückträger 11 des Drehtisches 9 einer ersten Arbeitsstation angeordnet ist. Am Portal 17 sind weiterhin von oben auf das Werkstück 15 einwirkende Schweißelektroden 20 befestigt, die zusammen mit auf den darunter befindlichen Hubtisch 9 angebrachten Gegenelektroden (nicht dargestellt) arbeiten. Auf dem Portal 17 können Transformatoren für die Schweißanlagen, Schalt- und Steuerschränke raumsparend angeordnet sein.

Sowohl im Zentrum des Drehtisches 2 als auch an dessen Peripherie sind Handhabungsautomaten 21 bzw. Schweißroboter 22 angeordnet; ebenso an den beiden Seiten des außerhalb des Drehtisches 2 angeordneten Hubtisches 12. Diese Handhabungsautomaten 21 bzw. Schweißroboter 22 können in Verbindung mit den am Portal 17 befindlichen Werkzeugen, wie z. B. den Schweißelektroden 20 sowie mit Werkzeugen an den Hubtischen 9, 12 alle Seiten der Werkstücke 15 erreichen und somit bearbeiten.

Das mit einer ersten Werkstückaufnahme 3 versehene Segment des Drehtisches 2 ist im vorliegenden Beispiel eine Einlegestation, in welche mittels des Hängeförderers 19 das Basisteil des Werkstückes 15, hier der Modul Unterbau einer Kraftfahrzeugkarosserie, eingelegt wird. Dabei wird das Werkstück 15 durch eine der zweiten Werkstückaufnahmen 11 auf dem diesem Segment zugehörigen angehobenen Hubtisch 9 an einer ersten Gruppe von Werkstückaufnahmefixpunkten positioniert. Durch Absenken des Hubtisches 9 unter die Rotationsebene des Drehtisches 2 wird das Werkstück 15 in die mit einer zweiten Gruppe von Werkstückaufnahmefixpunkten ausgerüstete erste Werkstückaufnahme 3 auf dem Drehtisch 2 lagegenau abgelegt. Der Drehtisch 2 dreht sich nun in Richtung des Pfeils 23 um einen Winkel von 60° weiter, so daß das Werkstück 15 in der Position der Werkstückaufnahme 4 liegt. Hier wird mittels eines Handhabungsautomaten 21 dem Werkstück 15 ein weiterer anzufügender Teil, nämlich der Vorderwagenmodul beigefügt, wobei die exakte Positionierung in gleicher Weise erfolgt wie bei dem zuvor beschriebenen Segment. Nach Weiterdrehen des Drehtisches 2 um weitere 60° werden die zusammengelegten Werkstückteile, nämlich Modul Unterbau und Modul Vorderwagen, mittels der Schweißelektroden 20 und der am darunterliegenden Hubtisch 9 befindlichen Gegenelektroden durch Widerstandsschweißen verbunden. Dabei gleicht die Hubbewegung des Hubtisches 9 die Schweißtoleranzen aus.

Das Werkstück 15 wird dabei von der Werkstückaufnahme 11 auf dem Hubtisch 9 an Werkstückaufnahmefixpunkten der ersten Gruppe gehalten. Nach dieser Schweißoperation wird das Werkstück 15 vom Hubtisch 9 wieder auf den Drehtisch 2 abgesenkt. Es wird dort vom Werkstückträger 5 an der ersten Gruppe von Werkstückaufnahmefixpunkten fixiert. Der Drehtisch 2 dreht um 60° weiter, so daß das Werkstück 15 an der Position des nächsten ersten Werkstückträgers 6 zu liegen kommt. Der darunter befindliche Hubtisch 9 hebt das Werkstück 15 aus diesem Werkstückträger 6. Der radial reversierbare Shuttle 14 unterfährt das Werkstück 15 und nimmt es in der zweiten Gruppe von Werkstückaufnahmefixpunkten auf, wenn sich der Hubtisch 9 danach senkt.

Der Shuttle 14 fördert das Werkstück 15 in eine Seitenwand-Heftstation, die sich über dem Hubtisch 12 außerhalb des Drehtisches 2 befindet und setzt es dort auf der zweiten Gruppe von Werkstückaufnahmefixpunkten ab. Hier können von beiden Seiten des Werkstückes 15 weitere Teile, nämlich die Seitenwände einer Fahrzeugkarosserie, unbeengt von Raumproblemen beigefügt werden. Die Seitenwände werden hier von Schweißrobotern 22 mit dem übrigen Werkstück 15 geheftet. Das so gefügte Werkstück 15 wird vom Hubtisch 12 an den Werkstückaufnahmefixpunkten der ersten Gruppe aufgenommen, aus den Werkstückaufnahmefixpunkten der zweiten Gruppe ausgehoben und anschließend wieder auf den Werkstückträger 6 des Drehtisches 2 abgelegt.

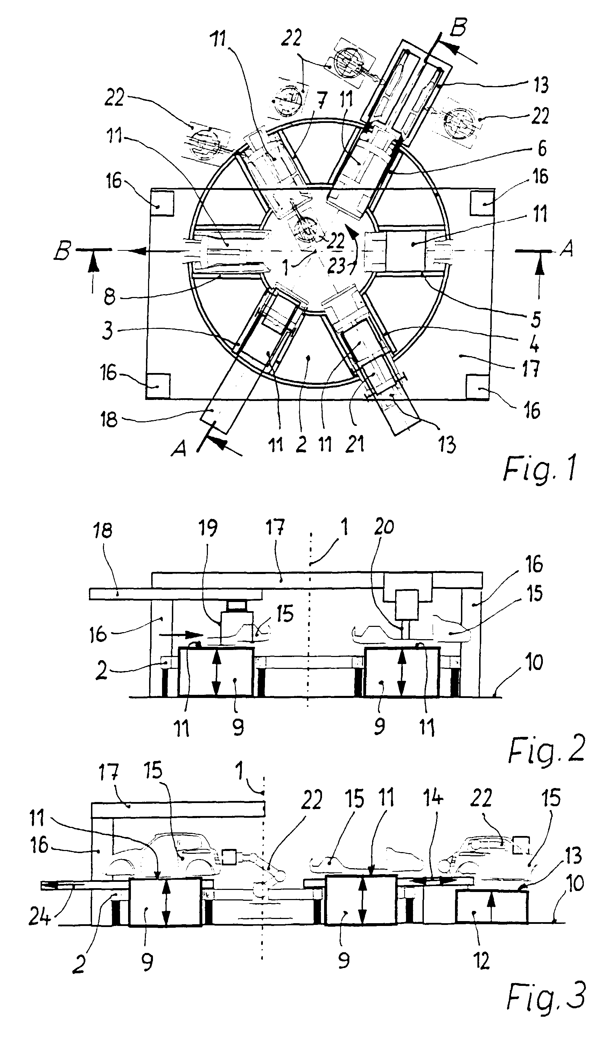

Nach Weiterdrehen des Drehtisches 2 liegt das Werkstück 15 auf dem Werkstückträger 7, von dem es von dem darunter befindlichen Hubtisch 9 und seinem Werkstückträger 11 aufgenommen und in Bearbeitungsposition gehoben wird. Die hier benachbarten Schweißroboter 22 schweißen die gehefteten Verbindungen aus. Danach senkt sich der unter dem Werkstückträger 7 befindliche Hubtisch 9, legt das Werkstück 15 auf den Werkstückträger 7 und der Drehtisch 2 taktet um 60° weiter, wonach das Werkstück 15 auf dem Werkstückträger 8 liegt. Der darunter angeordnete Hubtisch 9 hebt nun das Werkstück 15 aus den Werkstückaufnahmefixpunkten. Ein radial reversierbarer Shuttle 24 (Fig. 3), der analog zu dem Shuttle 14 arbeitet, schleust das Werkstück aus der Anlage aus.

Der besondere Vorteil der Anlage besteht darin, daß sie organisch in einen konzentrischen Fertigungsverbund einfügbar ist, bei dem in einem äußeren Ring die Materialbereitstellung erfolgt, in einem mittleren Ring, unterteilt in Sektoren, die Komponenten, wie z. B. Unterbodenmodul, Vorderwagenmodul, Seitenwände vorgefertigt werden und im Zentrum auf der erfindungsgemäßen Anlage der Zusammenbau der Kraftfahrzeugkarosserie erfolgt.

Die Vorfertigung der Komponenten kann dabei im üblichen Linienprinzip erfolgen oder aber auch durch entsprechend angepaßte Anlagen nach der Erfindung, wobei Einzelteile in Submodule aufgehen, die wiederum zu Hauptmodulen zusammengeschweißt werden.

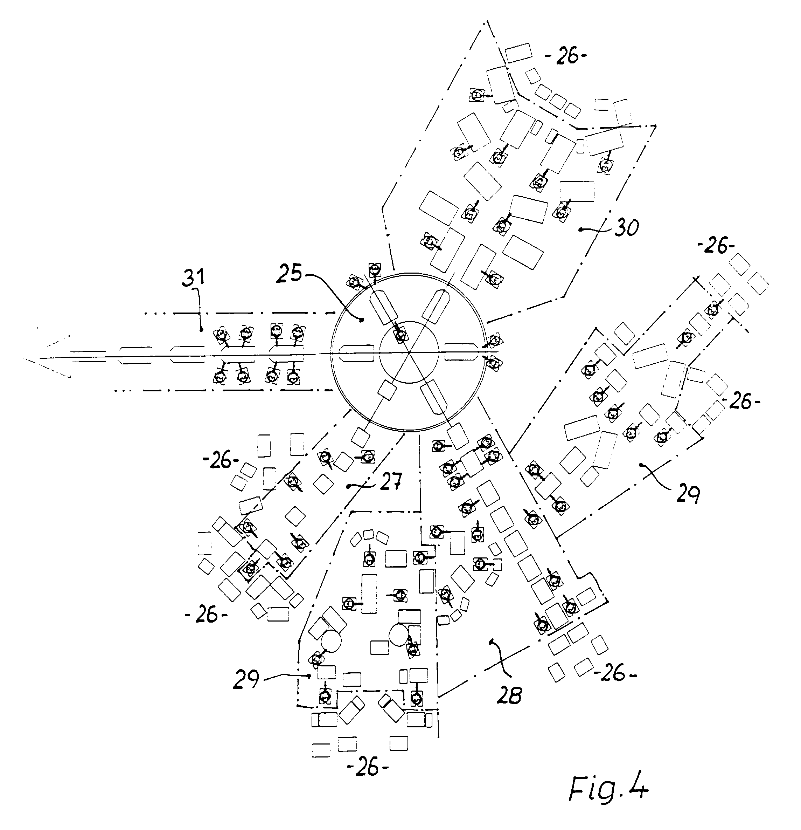

Figur 4 zeigt die Einbindung einer erfindungsgemäßen Anlage 25 in eine Gesamtfertigung. Dabei sind an der äußeren Peripherie der Gesamtfertigung Behälter 26 für die Bereitstellung des Materials erkennbar. Im mit 27 gekennzeichneten Bereich wird die Bodenanlage, im mit 28 gekennzeichneten Bereich der Vorderwagen, im mit 29 gekennzeichneten Bereich werden Komponenten des Vorderwagens und im mit 30 gekennzeichneten Bereich die Seitenwände einer Kraftfahrzeugkarosserie gefertigt. Auf der im Zentrum angeordneten erfindungsgemäßen Anlage 25 werden die vorgefertigten Module mit hoher Genauigkeit verbunden. Im Bereich 31 wird die Karosserie komplettiert.

Die Erfindung ist nicht auf das Ausführungsbeispiel beschränkt. So können auf dem Drehtisch 2 der Anlage 25 auch fünf, sieben oder auch eine anderszahlige Anzahl von Stationen vorgesehen sein. Ebenso ist die Anzahl der außerhalb des Drehtisches angeordneten Hubtische 12, die mit einem Shuttle 14 an den Drehtisch 2 angebunden sind, abhängig von den erforderlichen Arbeitsoperationen. Auch die Anzahl und die Anordnung der Handhabungsautomaten 21 sowie der Schweißroboter 22 kann auf die erforderlichen Arbeitsoperationen abgestimmt und so unterschiedlich konfiguriert sein.

## Patentansprüche

1. Anlage zum Zusammenfügen von Kraftfahrzeugkarosserien aus Blechteilen unter Einbeziehung einer Rundtaktmaschine, wobei ein taktweise intermittierend drehender Drehtisch (2) mit strahlenförmig angeordneten, von der Peripherie her zugänglichen ersten Werkstückträgern (3, 4, 5, 6, 7, 8) versehen ist, und wobei der Drehtisch (2) von einem Portal (17) zumindest teilweise überspannt ist und am Portal (17), an der Peripherie des Drehtisches (2), sowie im Bereich des Zentrums des Drehtisches (2) Handhabungsautomaten (21) und/oder Schweißroboter (22) bzw. Schweißwerkzeuge (10) angeordnet sind, **dadurch gekennzeichnet,** daß unter den ersten Werkstückträgern (3, 4, 5, 6, 7, 8) mit zweiten Werkstückträgern (11) versehene Hubtische (9) angeordnet sind, welche im abgesenkten Zustand unterhalb der Rotationsebene des Drehtisches (2) liegen und ein auf dem zweiten Werkstückträger (11) aufliegendes Werkstück (15) auf den ersten Werkstückträger (3, 4, 5, 6, 7, 8) auflegen und ein auf dem ersten Werkstückträger (3, 4, 5, 6, 7, 8) aufliegendes Werkstück (15) von diesem abheben können, in radialer Richtung zu einem oder mehreren der ersten Werkstückträger (3, 4, 5, 6, 7, 8) außerhalb des Drehtisches (2) dritte Werkstückträger (13) auf jeweils einem weiteren Hubtisch (12) angeordnet sind, zwischen dem dritten Werkstückträgern (13) und dem jeweils benachbarten ersten Werkstückträgern (3, 4, 5, 6, 7, 8) ein radial fördernder Shuttle (14) zum Versetzen des Werkstükkes (15) von einem (3, 4, 5, 6, 7, 8) zu dem anderen Werkstückträger (13) und umgekehrt vorgesehen ist, und an den Seiten der in radialer Richtung außerhalb des Drehtisches (2) befindlichen Hubtische (12) ebenfalls Handhabungsautomaten (21) und/oder Schweißroboter (22) bzw. Schweißwerkzeuge (10) angeordnet sind.

2. Anlage nach Anspruch 1, **dadurch gekennzeichnet,** daß am Portal (17) abgestützte Schweißelektroden (20) gemeinsam mit in den Hubtischen (9) abgestützten Schweißelektroden zusammenwirken.

3. Anlage nach Anspruch 1 und 2, **dadurch gekennzeichnet,** daß erforderliche Schweißtransformatoren, Schalt- und Steuerschränke auf dem Portal (17) angeordnet sind.

4. Anlage nach Anspruch 1 bis 3, **dadurch gekennzeichnet,** daß die zweiten (11) und dritten Werkstückträger (13) mit einer ersten Gruppe von Werkstückaufnahmefixpunkten und die ersten Werkstückträger (3, 4, 5, 6 ,7, 8) mit einer zweiten Gruppe von Werkstückaufnahmefixpunkten versehen sind.

## Claims

1. Apparatus for the assembly of motor vehicle bodies from panel portions including a rotary-cycle machine, wherein a turntable (2) which rotates intermittently in cycles is provided with radially mounted first work piece carriers (3, 4, 5, 6, 7, 8) accessible from the periphery, and wherein the turntable (2) is at least partially spanned by a portal (17), and on the portal (17), at the periphery of the turntable (2) and in the region of the centre of the turntable (2) are arranged automatic handling units (21) and/or welding robots (22) or welding tools (10), characterised in that under the first work piece carriers (3, 4, 5, 6, 7, 8) are arranged elevating platforms (9) which are provided with second work piece carriers (11) and which in the lowered state are located below the plane of rotation of the turntable (2) and can place a work piece (15) resting on the second work piece carrier (11) on the first work piece carrier (3, 4, 5, 6, 7, 8) and lift off it a work piece (15) resting on the first work piece carrier (3, 4, 5, 6, 7, 8), in a radial direction to one or more of the first work piece carriers (3, 4, 5, 6, 7, 8) outside the turntable (2) third work piece carriers (13) are arranged each on a further elevating platform (12), between the third work piece carriers (13) and the respectively adjacent first work piece carriers (3, 4, 5, 6, 7, 8) is provided a radial-transport shuttle (14) for moving the work piece (15) from one work piece carrier (3, 4, 5, 6, 7, 8) to the other (13) and vice versa, and on the sides of the elevating platforms (12) located outside the turntable (2) in the radial direction are also arranged automatic handling units (21) and/or welding robots (22) or welding tools (10).

2. Apparatus according to claim 1, characterised in that welding electrodes (20) supported on the portal (17) cooperate together with welding electrodes supported in the elevating platforms (9).

3. Apparatus according to claims 1 and 2, characterised in that necessary welding transformers, switching and control cabinets are arranged on the portal (17).

4. Apparatus according to claims 1 to 3, characterised in that the second (11) and third (13) work piece carriers are provided with a first group of work piece holding fixed points and the first work piece carriers (3, 4, 5, 6, 7, 8) are provided with a second group of work piece holding fixed points.

## Revendications

1. Installation pour l'assemblage de carrosseries de véhicules automobiles formées d'éléments en tôle en utilisant une machine-transfert rotative, une table rotative (2) qui tourne de manière intermittente, cadencée, étant pourvue de premiers porte-pièce (3, 4, 5, 6, 7, 8) disposés en rayons, accessibles depuis la périphérie, la table rotative (2) étant surmontée au moins partiellement d'un portique (17), des automates de manipulation (21) et/ou des robots de soudage (22) ou des outils de soudage (10) étant disposés sur le portique (17), à la périphérie de la table rotative (2) ainsi que dans la région du centre de la table rotative (2), caractérisée en ce que sous le premier porte-pièce (3, 4, 5, 6, 7, 8) sont disposées des tables élévatrices (9) munies de deuxièmes porte-pièce (11), qui, dans la position abaissée, sont situées au-dessous du plan de rotation de la table rotative (2) et peuvent déposer sur le premier porte-pièce (3, 4, 5, 6, 7, 8) une pièce (15) reposant sur le deuxième porte-pièce et soulever du premier porte-pièce (3, 4, 5, 6, 7, 8) une pièce (15) placée sur celui-ci, en ce que des troisièmes porte-pièce (13) sont disposés sur une autre table élévatrice (12), à l'extérieur de la table rotative (2) dans la direction radiale par rapport à un ou plusieurs des premiers porte-pièce (3, 4, 5, 6, 7, 8), en ce qu'il est prévu entre le troisième porte-pièce (13) et le premier porte-pièce (3, 4, 5, 6, 7, 8) voisin concerné, un chariot transporteur (14) radial pour déplacer la pièce (15) d'un porte-pièce (3, 4, 5, 6, 7, 8) à l'autre porte-pièce (15) et inversement, et en ce que des automates de manipulation (21) et/ou des robots de soudage (22) ou des outils de soudage (10) sont disposés sur les côtés des tables élévatrices (12) situées radialement à l'extérieur de la table rotative (2).

2. Installation selon la revendication 1, caractérisée en ce que des électrodes de soudage (20) montées sur le portique (17) coopèrent avec des électrodes de soudage montées dans les tables élévatrices (9).

3. Installation selon les revendications 1 et 2, caractérisée en ce que les transformateurs de soudage, les armoires de commutation et de commande sont disposés sur le portique (17).

4. Installation selon une des revendications 1 à 3, caractérisée en ce que les deuxième (11) et troisième (13) porte-pièce sont pourvus d'un premier groupe de points fixes de support de pièce et les premiers porte-pièce (3, 4, 5, 6, 7, 8) sont pourvus d'un second groupe de points fixes de support de pièce .
